# EUROPÄISCHE PATENTSCHRIFT

(11) **EP 2 405 849 B1**
(45) Veröffentlichungstag und Bekanntmachung des Hinweises auf die Patenterteilung: **12.10.2022**
(21) Anmeldenummer: 10710266.7
(22) Anmeldetag: 12.03.2010
(51) Int. Cl.: A61C 5/62, A61C 1/07, B05C 17/01

(54) **HANDGERÄT ZUR ABGABE EINER PASTÖSEN FÜLLMASSE**
MANUAL DEVICE FOR DISPENSING A PASTY FILLER
INSTRUMENT À MAIN POUR APPLICATION D'UNE MASSE D'OBTURATION PÂTEUSE

(30) Priorität: 13.03.2009 DE 102009013000
(43) Veröffentlichungstag der Anmeldung: 18.01.2012
(73) Patentinhaber: KaVo Dental GmbH, 88400 Biberach (DE)
(72) Erfinder: MÖßLE, Walter, 88441 Mittelbiberach (DE)
(74) Vertreter: Thun, Clemens
(86) Internationale Anmeldenummer: PCT/EP2010/053173
(87) Internationale Veröffentlichungsnummer: WO 2010/103099

(56) Entgegenhaltungen:
- WO-A2-2006/136398
- DE-A1- 10 001 513
- DE-A1-102007 022 205

## Beschreibung

Die vorliegende Erfindung betrifft ein Handgerät gemäß dem Oberbegriff des Anspruchs 1, welches insbesondere für dentale Zwecke vorgesehen und dazu ausgebildet ist, eine pastöse Füllmasse abzugeben, deren Viskosität durch Zuführung von Schwingungsenergie reduzierbar ist. Ferner betrifft die vorliegende Erfindung einen Behälter zur Aufnahme einer pastösen Füllmasse, der bei einem derartigen Handgerät verwendbar ist.

In der Medizintechnik ist es bekannt, Kavitäten in einem tierischen oder menschlichen Körperteil oder in einer Prothese mit einem Füllmaterial auszufüllen und somit zu reparieren, z. B. nach der spanabhebenden Ausarbeitung eines Defektes. Hierfür werden aushärtbare Füllmassen verwendet, die in einem pastösen oder flüssigen Zustand in die Kavität eingebracht werden und dann aushärten. Dabei ist zwischen einer direkten Füllung und einer indirekten Füllung zu unterscheiden. Bei einer direkten Füllung wird nur die Füllmasse in die Kavität eingebracht, so dass sie die Kavität ausfüllt. Bei einer indirekten Füllung wird ein vorzugsweise angepasstes Inlay-Einlegeteil mit der Füllmasse in die Kavität eingesetzt, so dass letzteres das Einlegeteil mit der Wandung der Kavität verbindet. Hierbei ist nicht nur eine mechanische Verankerung der Füllmasse in der Kavität wichtig, sondern auch eine dichte Aufnahme der Füllmasse in der Kavität, um Spalte zu vermeiden, durch die hindurch Verunreinigungen und Keime eindringen können, die bei einem Körpergewebe zu Entzündungen führen und die Präparation zerstören können.

Ein typischer Anwendungsfall einer vorbeschriebenen Präparation, bei der besondere Anforderungen bezüglich des Handgerätes und dessen Handhabung bestehen, ist die Zahnpräparierung im Mundraum eines Patienten oder eines Übungskopfes für Lernzwecke. Bei einem solchen dentalmedizinischen Behandlungsfall bestehen besondere Anforderungen bezüglich der Konstruktionsgröße des Handstücks, da der Mundraum eines Patienten verhältnismäßig klein ist und deshalb unter Berücksichtigung einer erforderlichen Sichtfreiheit eine möglichst kleine Konstruktionsgröße anzustreben ist.

In der DE 100 01 513 Al sind ein Verfahren zum Füllen einer Zahn-Füllmasse auf Kunstharzbasis in eine Kavität eines Zahnes und ein Handgerät zur Durchführung eines solchen Verfahrens beschrieben, wobei während des Füllens mit Schall, insbesondere mit Ultraschall auf die Füllmasse und eine Düse des Handgerätes eingewirkt wird und das Handgerät Mittel aufweist, welche die Füllmasse aus einem Vorratsbehälter der Düse fördern. Dieses bekannte Verfahren und Handgerät ermöglicht es, Füllmassen mit einem verhältnismäßig hohen Gehalt an Füllstoffen zu verwenden, die die Zähigkeit der Füllmasse vergrößern und dabei das Schrumpfen und die Gefahr einer Spaltbildung beim Aushärten verringern. Bei diesem vorbekannten Handgerät ist eine Hebeleinrichtung zum Fördern der Füllmasse vorgesehen, die bei ihrer manuellen Betätigung zugleich eine Ultraschallquelle, insbesondere einen Piezoschwinger, einschaltet, die bzw. der im hinteren Bereich des Handgerätekörpers angeordnet ist. Die Füllmasse ist in einer Kartusche angeordnet, die in einen im vorderen Endbereich des Handgerätekörpers angeordneten Ausschnitt einsetzbar und fixierbar ist. Beim manuellen Betätigen der Hebeleinrichtung wird die Füllmasse durch einen mit der Hebeleinrichung verbundenen und auf das hintere Ende der Kartusche einwirkenden Vorschubstempel herausgefördert.

Ein vergleichbares Gerät ist auch aus der WO 2006/136398 A2 der Anmelderin bekannt. Hierbei werden bestimmte Modifikationen an dem Handgerät vorgeschlagen, mit deren Hilfe einerseits das Ausbringen des Kompositmaterials und andererseits die Handhabung des Geräts verbessert werden. In der WO 2006/136398 A2 ist ein Handgerät, insbesondere ein Handgerät für dentale Zwecke, zur Abgabe einer pastösen Füllmasse beschrieben, wobei die Viskosität der Füllmasse durch Zuführung von Schwingungsenergie reduzierbar ist.

Aus hygienischen Gründen wäre es von Vorteil, den Vorratsbehälter für das Kompositmaterial mit der Austrittsdüse in Form einer Kartusche als Wegwerf- bzw. Einmalartikel auszugestalten. Bei jeder Behandlung könnte dann eine neue Kartusche verwendet werden, so dass ein Reinigen und Desinfizieren, welches andernfalls unerlässlich wäre, vermieden werden kann. Auf der anderen Seite hat diese Lösung zur Folge, dass eine lösbare Verbindung zwischen Vorratsbehälter und Handgerät zwingend erforderlich ist, was zu Problemen hinsichtlich der Effektivität der Schwingungsübertragung sowie beim Ausbringen des Füllmaterials führen kann.

Der vorliegenden Erfindung liegt deshalb die Aufgabe zugrunde, die aus dem Stand der Technik bekannten Konzepte zum Ausbringen eines Füllmaterials zu optimieren, um letztendlich die Möglichkeit zu eröffnen, die Vorratsbehälter für die pastöse Füllmasse lösbar bzw. auswechselbar zu gestalten, wobei trotz allem eine effektive Schwingungsübertragung und Ausbringung des Materials gewährleistet sein soll.

Die Aufgabe wird durch ein Handgerät, welches die Merkmale des unabhängigen Anspruchs aufweist, gelöst. Vorteilhafte Weiterbildungen der Erfindung sind Gegenstand der abhängigen Ansprüche.

Dabei ist gemäß der vorliegenden Erfindung vorgesehen, dass der Behälter für die pastöse Füllmasse derart ausgestaltet ist, dass dieser in einem mittleren Bereich lösbar mit einem Schwingkörper des Handgeräts verbunden ist.

Erfindungsgemäß wird dementsprechend ein Handgerät, insbesondere für dentale Zwecke, zur Abgabe einer pastösen Füllmasse, deren Viskosität durch Zuführung von Schwingungsenergie reduzierbar ist, vorgeschlagen, mit einem als Gerätegehäuse ausgebildeten Geräteschaft, einem lösbaren Behälter für die pastöse Füllmasse, der an seinem vorderen Ende eine Austrittsdüse aufweist, einem im Geräteschaft angeordneten Schwingungsgenerator mit einem Schwingkörper und Druckerzeugungsmitteln zum Ausüben von Druck auf die pastöse Füllmasse, wobei der Schwingkörper in einem mittleren Bereich des Behälters lösbar mit diesem verbunden ist. Dabei sind die Druckerzeugungsmittel im mittleren Bereich des Geräteschafts ausgebildet, wodurch sich das Ausbringen des in der Kartusche befindlichen Füllmaterials durch das Handgerät unterstützen lässt. Ferner weist der Behälter erfindungsgemäß an seinem vorderen Bereich eine Kanüle auf, welche die Austrittsdüse bildet, wobei Mittel zum Verbinden des Behälters mit dem Schwingkörper am Ende der Kanüle ausgebildet sind. Hierdurch ist gewährleistet, dass die Schwingungen bis zu dem Zeitpunkt, zu dem die pastöse Füllmasse die Kanüle verlässt, effektiv auf die Füllmasse übertragen werden.

Vorzugsweise bildet dabei die Kanüle ein separates Bauelement, welches mit einem einen Aufnahmeraum für die Füllmasse bildenden weiteren Bauelement zu dem Behälter zusammengefügt ist. Dieses den Aufnahmeraum für die Füllmasse bildende weitere Bauelement kann dann insbesondere in einem an dem Handgerät angeordneten Zustand im Wesentlichen innerhalb einer Aufnahmeöffnung des Schwingkörpers passgenau angeordnet sein. Das weitere Bauelement dient damit zur Führung und zum besseren Einfädeln des ggf. verwendeten Gewindes zum lösbaren Befestigen des Behälters an dem Handgerät. Ferner muss die Wandung des Behälters nicht mehr druckstabil ausgebildet sein, da es sich nunmehr unmittelbar an dem Schwingkörper abstützen kann und somit die gesamten Kräfte aufnimmt.

Die Kanüle weist dabei vorzugsweise an ihrem rückwärtigen Ende, welches dem den Aufnahmeraum für die Füllmasse bildenden Bauelement zugewandt ist, einen flanschartigen Endbereich aufweist, der von dem Außenumfang des Bauelements leicht beabstandet ist. Hierbei kann am Innenumfang des flanschartigen Endbereichs ist ein Gewinde ausgebildet sein, über das ein Aufschrauben des Behälters auf den Schwingkörper, der seinerseits ein Gewinde aufweist, ermöglicht ist. Diese Maßnahmen tragen dazu bei, dass ein einfaches Befestigen und Lösen des Behälters an dem Handgerät ermöglicht ist.

Die zweiteilige Form des Behälters ist ferner insofern von Vorteil, als ein effektives und damit kostengünstiges Ausformen der Kanüle ermöglicht ist. Die Kanüle ist hierbei insbesondere derart ausgebildet, dass sie einen zum vorderen Ende hin gerichteten konischen Freiraum aufweist. Dieser bewirkt, dass während des Ausbringens das Füllmaterial kontinuierlich einer Scherspannung unterzogen wird, was zur Folge hat, dass es besser durchwärmt und damit flüssiger wird. Dies trägt zu einem nochmals verbesserten Ausbringen des Materials bei.

Der Behälter kann ferner an seinem rückwärtigen Bereich einen Druckkolben aufweisen, auf den zum Ausbringen der Füllmasse Druckerzeugungsmittel des Handgeräts einwirken. Die Druckerzeugungsmittel können hierbei eine Kolbenstange aufweisen, die auf den Druckkolben einwirkt.

Dabei können ferner Rückstellmittel, insbesondere ein oder mehrere Federelemente vorgesehen sein, mit deren Hilfe die Kolbenstange in eine Ausgangsposition vorgespannt ist. Nach einem Wechsel des Behälters mit dem Füllmaterial ist somit das Gerät unmittelbar wieder einsatzbereit. Der Schwingungsgenerator ist vorzugsweise ein pneumatisch antreibbarer Schwingungsgenerator, wobei in diesem Fall dann eine gemeinsame Druckversorgung für den Schwingungsgenerator und die Druckerzeugungsmittel vorgesehen ist.

Insgesamt gesehen wird durch die vorliegende Erfindung dementsprechend ein verbessertes Konzept zum Ausbringen von Füllmaterialien zur Erstellung von Zahnfüllungen angegeben, wobei insbesondere die Möglichkeit eröffnet ist, den Vorratsbehälter für das Füllmaterial mit der Austrittsdüse als Einmal- bzw. Wegwerfartikel zu gestalten.

Nachfolgend soll die Erfindung anhand der beiliegenden Zeichnung näher erläutert werden. Es zeigen:
- Fig. 1: die Gesamtansicht eines erfindungsgemäßen Handgeräts in seitlicher Schnittdarstellung;
- Fig. 2: eine vergrößerte Ansicht des vorderen Endbereichs des Handgeräts mit dem daran befestigen Behälter für das Kompositmaterial; und
- Fig. 3: den Behälter für das Kompositmaterial in Schnittdarstellung.

Das in den Figuren allgemein mit dem Bezugszeichen 1 bezeichnete erfindungsgemäße Handgerät weist einen länglichen, insbesondere stabförmigen Geräteschaft 2 auf, der zur Aufnahme der verschiedenen Komponenten des Geräts 1 hülsenförmig ausgestaltet ist. Dabei ist insbesondere im vorderen Bereich des Geräteschafts 2 ein Schwingungsgenerator 5 angeordnet, der über Schwingungsübertragungsmittel mit einer später noch im Detail beschriebenen Kartusche 30 gekoppelt ist. Die Kartusche 30 dient zur Aufnahme und Ausgabe eines Füllmaterials 50, welches durch die Beaufschlagung mit Schwingungen im Schall- oder Ultraschallbereich verflüssigt werden kann.

Das Handgerät 1 unterstützt ferner das Ausbringen des in der Kartusche 30 befindlichen Füllmaterials 50, wozu im mittleren Bereich des Geräteschafts 2 Druckerzeugungsmittel 15 ausgebildet sind. Diese später noch näher beschriebenen Druckerzeugungsmittel 15 weisen insbesondere eine Kolbenstange 16 auf, welche während des Betriebs des Handgeräts 1 Druck auf einen im rückwärtigen Bereich der Kartusche 30 befindlichen Kolben 40 ausübt, wodurch das in der Kartusche 30 befindliche Material 50 zur vorderen Austrittsöffnung 36 einer Austrittsdüse 35 befördert wird.

Für den Schwingungsgenerator 5 sowie die Druckerzeugungsmittel 15 ist eine gemeinsame Druckversorgung vorgesehen. Das Handgerät 1 ist hierfür zunächst an seinem rückwärtigen Endbereich mit einem Kupplungsteil 25 ausgestattet, welches den Anschluss des Geräts 1 an einen an sich bekannten und zu einer - nicht dargestellten - Versorgungseinheit führenden Schlauch ermöglicht. Das Kupplungsstück 25 kann dabei derart ausgestaltet sein, dass eine freie Drehbarkeit des Handgeräts 1 gegenüber dem Versorgungsschlauch ermöglicht ist.

Der Druck der von dem Versorgungsschlauch zur Verfügung gestellten Druckluft wird hierbei zunächst über einen im rückwärtigen Bereich des Schafts 2 angeordneten Druckbegrenzer 26 reguliert. Eine Einstellung dieses Druckbegrenzers 26 erfolgt über ein Bedienelement 27, bspw. einen Einstellring, der am Außenumfang des Handgeräts 1 ausgebildet ist. Durch Verdrehen dieses Einstellrings 27 kann der Druck wahlweise erhöht oder reduziert und damit die Leistung des Schwingungsgenerators 5 sowie der Druckerzeugungsmittel 15 eingestellt werden. Der Druckbegrenzer 26 gewährleistet hierbei ferner, dass in der Versorgungsluft auftretende Druckschwankungen ausgeglichen werden, so dass permanent ein gleichmäßiger Arbeitsdruck anliegt.

Die durch den Druckbegrenzer 26 auf einen gewünschten Druckwert eingestellte Druckluft wird dann zunächst über eine Kolbenkammer 17 der Druckerzeugungsmittel 15 in den vorderen Bereich des Handgeräts 1 geleitet. Innerhalb dieser Kolbenkammer 17 ist ein mit der Kolbenstange 16 verbundener Kolben 18 angeordnet, der insbesondere als Doppelkolben ausgebildet ist. Durch die Verwendung eines Doppelkolbens wird aufgrund der hierdurch erhöhten Angriffsfläche für die Druckluft die Anpresskraft erhöht, so dass letztendlich die Kolbenstange 16 mit einer ausreichenden Kraft nach vorne geschoben wird. Ferner ist im vorderen Bereich der Kolbenkammer 17 eine Feder 19 angeordnet, welche sich einerseits an der vorderen Stirnwand der Kolbenkammer 17 und andererseits an dem Kolben 18 abstützt. Diese Spiralfeder 19 dient als Rückstellungshilfe und sorgt dafür, dass nach Abschalten des Handgeräts 1 und damit Unterbrechung der Druckluft der Kolben 18 und die mit dem Kolben 18 verbundene Kolbenstange 16 automatisch in eine Ausgangsposition verschoben werden. Ein manuelles Rückstellen der Kolbenstange 16 ist dementsprechend nicht erforderlich, so dass nach Aufsetzen einer neuen Kartusche 30 auf das Gerät 1 automatisch Betriebsbereitschaft vorliegt.

Die Druckluft wird ferner auch dem Schwingungsgenerator 5 zugeführt, bei dem es sich um einen in bekannter Weise ausgestalteten pneumatischen Schwingungserreger zum Erzeugen von Schwingungen im Schall- oder Ultraschallbereich handelt. Dieser weist einen Resonanzkörper 6 auf, der an seinem vorderen und hinteren Ende elastisch gelagert und abgestützt ist. Ferner ist der Resonanzkörper über entsprechende Mittel 7 verdrehsicher in dem Schaft 2 des Geräts 1 gelagert und derart ausgestaltet, dass er bei Zuführung von Druckluft in Schwingungen versetzt wird. Der Schwingungskörper 6 ist hierbei innerhalb einer durch eine Hülse 8 gebildeten Kammer angeordnet, die wiederum beabstandet von einer Außenwand des Schafts 2 angeordnet ist. Hierdurch wird eine Geräuschdämpfung während des Betriebs des Schwingungsgenerators 5 ermöglicht.

Ferner ist der Resonanzkörper 6 als Hohlkörper ausgestaltet, so dass die Kolbenstange 16 durch diesen axial geführt ist. An seinem vorderen Ende ist der Resonanzkörper 6 mit einem hülsenförmigen Schwingkörper 10 gekoppelt, über den dann - wie nachfolgend detailliert beschrieben - die Schwingungen auf die Kartusche 30 übertragen werden.

Nach Aktivieren des Handgeräts setzt dementsprechend der Schwingungsgenerator 5 den Schwingkörper 10 in Vibrationen. Gleichzeitig wird durch die Druckerzeugungsmittel 15 die Kolbenstange 16 nach vorne, im dargestellten Fall also nach links geschoben, um das Ausbringen des Kompositmaterials 50 zu unterstützen. Eine separate Betätigung des Geräts 1 zum Ausbringen der Füllmasse 50 ist somit nicht erforderlich.

Nachfolgend soll detailliert die Kartusche 30 beschrieben werden, welche insbesondere als Wegwerfartikel gestaltet sein soll. Diese besteht vorzugsweise aus zwei Elementen, einer vorderen Austrittsdüse 35 sowie einem hülsenförmigen Bauelement 31, welches als Aufnahmebehälter für das Kompositmaterial 50 dient. Der Aufnahmebehälter 31 ist hohlzylinderförmig ausgestaltet und an seinem vorderen Ende mit der Austrittshilfe 35 gekoppelt, bspw. mit dieser verschweißt, verklebt oder durch Presssitz mit dieser verbunden. Am hinteren Ende das Aufnahmebehälter 31 ist beweglich ein Kolben 40 angeordnet, der zum Ausbringen des Füllmaterials 40 über die Kolbenstange 16 nach vorne geschoben wird.

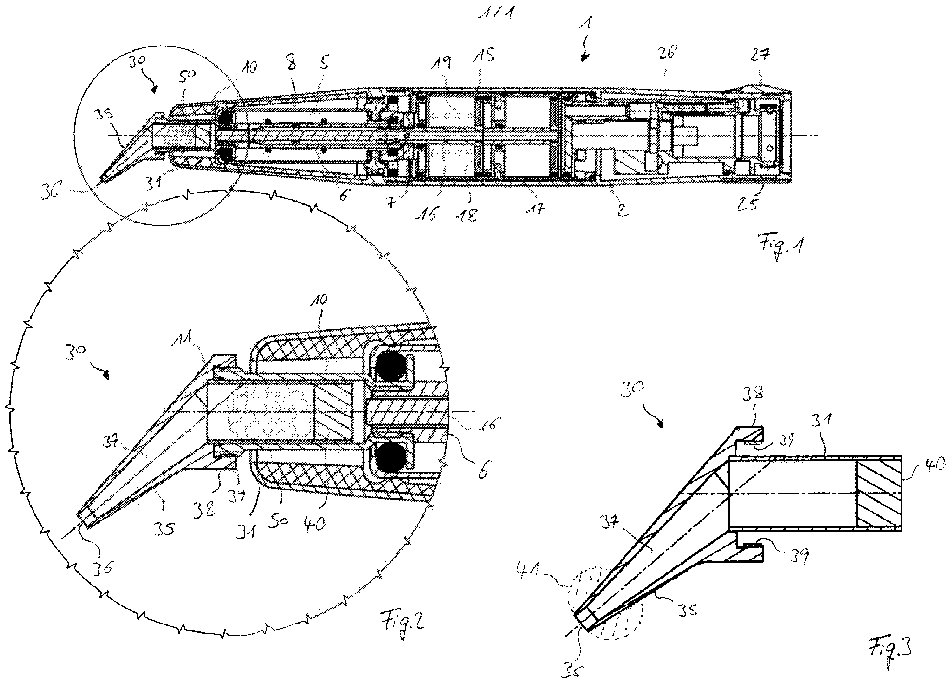

Die Austrittshülse 35 ist aus ergonomischen Gründen abgewinkelt zum Behälter 31 angeordnet. Sie weist einen länglichen Hohlraum 37 auf, der an seinem vorderen Ende in der Austrittsöffnung 36 mündet. Der längliche Hohlraum 37 ist hierbei insbesondere konisch ausgestaltet, weist also in Richtung zum Austrittsende 36 hin einen sich zunehmend verjüngenden Querschnitt auf. Dies hat zur Folge, dass das Kompositmaterial 50 während des Ausbringens kontinuierlich einer Scherspannung unterzogen und somit besser durchwärmt und verflüssigt wird. Im Vergleich zu bekannten Lösungen, bei denen die Kanülen üblicherweise eine zylindrische Durchgangsöffnung aufweisen, wird dementsprechend eine bessere Verflüssigung des Kompositmaterials 50 während der Ausbringphase erzielt. Dabei kann - wie in Figur 3 angedeutet - das vordere Ende der Kanüle 35 auch in Form einer Kugel 41 ausgebildet sind. In diesem Fall kann die Kanüle 35 dazu genutzt werden, das bereits in die Zahnkavität eingebrachte Material durch Bearbeiten des mit Schall beaufschlagten kugelförmigen Endbereichs 41 zu verdichten.

Wie den Darstellungen der Fig. 2 und 3 ferner entnommen werden kann, weist die Düse 35 an ihrem rückwärtigen, dem Vorratsbehälter 31 zugewandten Ende einen flanschartigen Endbereich 38 auf, der von dem Außenumfang des Vorratsbehälters 31 leicht beabstandet ist. Am Innenumfang des flanschartigen Endbereichs 38 ist ein Gewinde 39 ausgebildet, über das ein Aufschrauben der Kartusche 30 auf den Schwingkörper 10, der seinerseits ein Gewinde 11 aufweist, ermöglicht ist, so dass sich die in Fig. 2 dargestellte Konfiguration ergibt. Dabei ist darauf hinzuweisen, dass alternativ zu der dargestellten Schraubverbindung das Anschließen der Kartusche 30 an das Gerät 1 auch über eine Bajonettverbindung oder eine andere geeignete Schnellschlussverbindung erfolgen könnte. Das Anordnen der Verbindungsmittel im mittleren Bereich der Kartusche 30 führt zu mehreren Vorteilen, die nachfolgend erläutert werden sollen.

So ist zunächst gewährleistet, dass aufgrund der unmittelbaren Kopplung der Düse 35 mit dem Schwingkörper 10 bzw. der Anordnung des Gewindes 39 an dem rückwärtigen Ende der Kanüle 35 eine gezieltere Schalleinwirkung zur Verflüssigung des Kompositmaterials 50 erzielt wird. Insbesondere ist sichergestellt, dass der Schall nahezu über die gesamte Strecke hinweg auf das Kompositmaterial 50 einwirken kann, wozu insbesondere auch die Reduktion des Querschnitts beiträgt, da das Material 50 mit der Wandung der Kanüle 35 voll in Berührung kommt. Da sich ferner der Vorratsbehälter 31 weitestgehend innerhalb des Schwingkörpers 10 befindet, ist ein geringerer Bereich der Oberfläche der Kartusche 30 in Kontakt mit der Außenseite, so dass eine Geräuschreduzierung während des Betriebs erzielt wird. Ferner ist es nicht erforderlich, dass die Wandung des Behälters 31 druckstabil ausgebildet ist, da sie sich jetzt direkt an dem Schwingkörper 10 abstützen kann und somit die gesamten Auspresskräfte aufnimmt.

Letztendlich führen diese Vorteile dazu, dass die Kartusche 30 in einfacher Weise als Wegwerf- bzw. Einmalprodukt ausgestaltet sein kann. Die hygienischen Vorschriften insbesondere in der zahnmedizinischen Praxis können ohne hohen Aufwand gehalten werden, wobei jedoch gleichzeitig sichergestellt ist, dass das Kompositmaterial effektiv während des Ausbringens verflüssigt wird. Dies führt zu einer deutlichen Verbesserung der Betriebseigenschaften des erfindungsgemäßen Handgeräts.

Dabei ist abschließend darauf hinzuweisen, dass die erfindungsgemäße Kartusche selbstverständlich auch bei Handgeräten zum Einsatz kommen könnte, welche keine Mittel zum automatischen Ausbringen der Füllmasse sondern beispielsweise einen separat zu betätigenden Hebelmechanismus, wie er aus der DE 100 01 513 Al bekannt ist, aufweisen. Auch in diesem Fall trägt die besondere Anordnung der Kartusche an dem Gerät zu einer verbesserten Schwingungsübertragung bei.

## Patentansprüche

1. Handgerät (1), insbesondere für dentale Zwecke, zur Abgabe einer pastösen Füllmasse (50), deren Viskosität durch Zuführung von Schwingungsenergie reduzierbar ist, mit
• einem als Gerätegehäuse ausgebildeten Geräteschaft (2),
• einem lösbaren Behälter (30) für die pastöse Füllmasse (50), der an seinem vorderen Ende eine Austrittsdüse (35) aufweist,
• einem im Geräteschaft (2) angeordneten Schwingungsgenerator (5) mit einem Schwingkörper (10), und
• Druckerzeugungsmitteln (15) zum Ausüben von Druck auf die pastöse Füllmasse (50),
wobei der Schwingkörper (10) in einem mittleren Bereich des Behälters (30) mit diesem lösbar verbunden ist,
wobei die Druckerzeugungsmittel (15) im mittleren Bereich des Geräteschafts (2) ausgebildet sind,
und wobei der Behälter (30) an seinem vorderen Bereich eine Kanüle (35) aufweist, welche die Austrittsdüse bildet, wobei Mittel zum Verbinden des Behälters (30) mit dem Schwingkörper (10) am Ende der Kanüle (35) ausgebildet sind.

2. Handgerät nach Anspruch 1,
**dadurch gekennzeichnet,**
**dass** die Kanüle (35) ein separates Element ist, welches mit einem einen Aufnahmeraum für die Füllmasse (50) bildenden Bauelement (31) zu dem Behälter (30) zusammengefügt ist.

3. Handgerät nach Anspruch 2,
**dadurch gekennzeichnet,**
**dass** die Kanüle (35) an ihrem rückwärtigen Ende, welches dem den Aufnahmeraum für die Füllmasse (50) bildenden Bauelement (31) zugewandt ist, einen flanschartigen Endbereich (38) aufweist, der von dem Außenumfang des Bauelements (31) leicht beabstandet ist.

4. Handgerät nach Anspruch 3,
**dadurch gekennzeichnet,**
**dass** am Innenumfang des flanschartigen Endbereichs (38) ist ein Gewinde (39) ausgebildet, über das ein Aufschrauben des Behälters (30) auf den Schwingkörper (10), der seinerseits ein Gewinde (11) aufweist, ermöglicht ist.

5. Handgerät nach einem der Ansprüche 2 bis 4,
**dadurch gekennzeichnet,**
**dass** das den Aufnahmeraum für die Füllmasse (50) bildende Bauelement (31) im an dem Handgerät (1) angeordneten Zustand im Wesentlichen innerhalb einer Aufnahmeöffnung des Schwingkörpers (10) angeordnet ist.

6. Handgerät nach einem der vorhergehenden Ansprüche,
**dadurch gekennzeichnet,**
**dass** die Düse eine zum vorderen Ende hin gerichtete konische Kammer (37) zur Durchleitung des Füllmaterials (50) aufweist.

7. Handgerät nach einem der vorhergehenden Ansprüche,
**dadurch gekennzeichnet,**
**dass** der Behälter (30) in seinem rückwärtigen Bereich einen Druckkolben (40) aufweist, auf dem zum Ausbringen der Füllmasse (50) die Druckerzeugungsmittel (15) einwirken.

8. Handgerät nach Anspruch 7,
**dadurch gekennzeichnet,**
**dass** die Druckerzeugungsmittel (15) eine Kolbenstange (16) aufweisen, welche auf den Druckkolben (40) des Behälters (30) einwirkt.

9. Handgerät nach Anspruch 8,
**dadurch gekennzeichnet,**
**dass** dieses Rückstellmittel (19), insbesondere ein oder mehrere Federelemente, zur Vorspannung der Kolbenstange (16) in eine Ausgangsposition aufweist.

10. Handgerät nach einem der vorherigen Ansprüche,
**dadurch gekennzeichnet,**
**dass** der Schwingungsgenerator (5) ein pneumatisch antreibbarer Schwingungsgenerator ist, wobei eine gemeinsame Druckversorgung für den Schwingungsgenerator (5) und die Druckerzeugungsmittel (15) vorgesehen ist.

## Claims

1. Handheld tool (1), in particular for dental purposes, for dispensing a pasty filling compound (50), the viscosity of which can be reduced by supplying oscillation energy, comprising
• a tool shaft (2) in the form of a tool housing,
• a detachable container (30) for the pasty filling compound (50), said container having an outlet nozzle (35) at its front end,
• an oscillation generator (5) which is arranged in the tool shaft (2) and which has an oscillating body (10), and
• pressure generating means (15) for exerting pressure on the pasty filling compound (50),
wherein the oscillating body (10) is detachably connected to the container (30) in a central region of the latter, wherein the pressure generating means (15) are formed in the central region of the tool shaft (2),
and wherein the container (30) has, in its front region, a cannula (35) forming the outlet nozzle, wherein means for connecting the container (30) to the oscillating body (10) are formed at the end of the cannula (35).

2. Handheld tool according to Claim 1,
**characterized**
**in that** the cannula (35) is a separate element which, to form the container (30), is joined together with a component (31) forming a receiving space for the filling compound (50).

3. Handheld tool according to Claim 2,
**characterized**
**in that** the cannula (35) has, at its rear end facing the component (31) forming the receiving space for the filling compound (50), a flange-like end region (38) which is spaced apart slightly from the outer circumference of the component (31).

4. Handheld tool according to Claim 3,
**characterized**
**in that** a thread (39) is formed on the inner circumference of the flange-like end region (38) and can be used to screw the container (30) onto the oscillating body (10), which in turn has a thread (11).

5. Handheld tool according to one of Claims 2 to 4, **characterized**
**in that** the component (31) forming the receiving space for the filling compound (50) is arranged, in the state arranged on the handheld tool (1), substantially within a receiving opening of the oscillating body (10).

6. Handheld tool according to one of the preceding claims,
**characterized**
**in that** the nozzle has a conical chamber (37) which is directed towards the front end and through which the filling material (50) is channelled.

7. Handheld tool according to one of the preceding claims,
**characterized**
**in that** the container (30) has, in its rear region, a pressure piston (40), on which the pressure generating means (15) act to dispense the filling compound (50).

8. Handheld tool according to Claim 7,
**characterized**
**in that** the pressure generating means (15) has a piston rod (16) which acts on the pressure piston (40) of the container (30).

9. Handheld tool according to Claim 8,
**characterized**
**in that** it has restoring means (19), in particular one or more spring elements, for preloading the piston rod (16) into a starting position.

10. Handheld tool according to one of the preceding claims,
**characterized**
**in that** the oscillation generator (5) is a pneumatically driveable oscillation generator, wherein a common pressure supply for the oscillation generator (5) and the pressure generating means (15) is provided.

## Revendications

1. Instrument à main(1), en particulier pour des utilisations dentaires, pour la distribution d'une masse de remplissage (50) pâteuse, dont la viscosité peut être réduite par apport d'énergie d'oscillation, avec
- une tige d'instrument (2) réalisée comme boîtier d'instrument (2),
- un récipient (30) amovible pour la masse de remplissage (50) pâteuse qui présente à son extrémité avant une buse de sortie (35),
- un générateur d'oscillations (5) agencé dans la tige d'instrument (2) avec un corps d'oscillation (10), et
- des moyens de génération de pression (15) pour l'exercice de pression sur la masse de remplissage (50) pâteuse,
dans lequel le corps d'oscillation (10) est relié de manière détachable dans une zone médiane du récipient (30) à celui-ci,
dans lequel les moyens de génération de pression (15) sont réalisés dans la zone médiane de la tige d'instrument (2),
et dans lequel le récipient (30) présente au niveau de sa zone avant une canule (35) qui forme la buse de sortie, dans lequel des moyens pour la liaison du récipient (30) avec le corps d'oscillation (10) sont réalisés à l'extrémité de la canule (35).

2. Instrument à main selon la revendication 1,
**caractérisé en ce**
**que** la canule (35) est un élément séparé qui est assemblé avec un élément de construction (31) formant un espace de réception pour la masse de remplissage (50) pour former le récipient (30).

3. Instrument à main selon la revendication 2,
**caractérisé en ce**
**que** la canule (35) présente à son extrémité arrière qui est tournée vers l'élément de construction (31) formant l'espace de réception pour la masse de remplissage (50), une zone d'extrémité (38) de type bride qui est légèrement espacée de la périphérie extérieure de l'élément de construction (31).

4. Instrument à main selon la revendication 3,
**caractérisé en ce**
**qu'**un filet (39) est réalisé au niveau de la périphérie intérieure de la zone d'extrémité (38) de type bride, par le biais duquel un vissage du récipient (30) est permis sur le corps d'oscillation (10) qui présente de son côté un filet (11).

5. Instrument à main selon l'une quelconque des revendications 2 à 4, **caractérisé en ce**
**que** l'élément de construction (31) formant l'espace de réception pour la masse de remplissage (50) est agencé dans un état agencé dans l'instrument à main(1) sensiblement dans une ouverture de réception du corps d'oscillation (10).

6. Instrument à main selon l'une quelconque des revendications précédentes,
**caractérisé en ce**
**que** la buse présente une chambre (37) conique dirigée vers l'extrémité avant pour l'acheminement du matériau de remplissage (50).

7. Instrument à main selon l'une quelconque des revendications précédentes,
**caractérisé en ce**
**que** le récipient (30) présente dans sa zone arrière un piston de pression (40), sur lequel les moyens de génération de pression (15) agissent pour la distribution de la masse de remplissage (50).

8. Instrument à main selon la revendication 7,
**caractérisé en ce**
**que** les moyens de génération de pression (15) présentent une tige de piston (16) qui agit sur le piston de pression (40) du récipient (30).

9. Instrument à main selon la revendication 8,
**caractérisé en ce**
**que** ce moyen de rappel (19) présente en particulier un ou plusieurs éléments de ressort pour la précontrainte de la tige de piston (16) dans une position de départ.

10. Instrument à main selon l'une quelconque des revendications précédentes,
**caractérisé en ce**
**que** le générateur d'oscillations (5) est un générateur d'oscillations entraînable .pneumatiquement, dans lequel une alimentation en pression commune pour le générateur d'oscillations (5) et les moyens de génération de pression (15) est prévue.
